# EUROPEAN PATENT APPLICATION

(11) **EP 4 202 675 A1**
(43) Date of publication of application: **28.06.2023**
(21) Application number: 21858083.5
(22) Date of filing: 15.07.2021
(51) Int. Cl.: G06F 9/50, G06F 16/182

(54) **INFORMATION PROCESSING DEVICE, INFORMATION PROCESSING METHOD, AND INFORMATION PROCESSING PROGRAM**

(30) Priority: 18.08.2020 JP 2020138222
(71) Applicant: FUJIFILM Corporation, Tokyo 106-8620 (JP)
(72) Inventor: OISHI, Yutaka, Tokyo 106-8620 (JP); MATSUMURA, Koji, Tokyo 106-8620 (JP); KONDO, Michitaka, Tokyo 106-8620 (JP); UNO, Yuko, Tokyo 106-8620 (JP)
(74) Representative: Klunker IP Patentanwälte PartG mbB
(86) International application number: PCT/JP2021/026634
(87) International publication number: WO 2022/038934

(57) **Abstract**

An information processing apparatus includes at least one processor and distributes an object to be stored for which an object after update has same identification information as an object before update to any of a plurality of storage nodes in accordance with a distribution rule set in advance. The processor is configured to receive the object to be stored, in a case where the distribution rule is changed, issue an inquiry as to whether or not an object having same identification information as the received object is stored to at least one storage node as a distribution destination corresponding to a past distribution rule, in a case where a response indicating that the object having the same identification information as the received object is stored is made from any storage node to which the inquiry is issued, distribute the received object to the storage node storing the object having the same identification information as the received object, and in a case where the response indicating that the object having the same identification information as the received object is stored is not made from any storage node to which the inquiry is issued, distribute the received object to any of the plurality of storage nodes in accordance with a most recent distribution rule.

## Description

### BACKGROUND OF THE INVENTION

### 1. Field of the Invention

The disclosed technology relates to an information processing apparatus, an information processing method, and an information processing program.

### 2. Description of the Related Art

The following technology has been known as a technology related to distribution of data to a server cluster consisting of a plurality of servers.

For example, JP2011-96161A discloses a system in which distributed processing is performed by a server cluster including a plurality of servers. This system comprises a plurality of first servers that provide service by distributed processing based on a predetermined file by transmitting and receiving data constituting a session, a plurality of second servers that, in a case where a new file that is an updated file of the predetermined file is acquired, provide service based on the new file instead of the plurality of first servers, and a load balancer that operates based on any of a first distribution rule having content of performing distribution to any of the plurality of first servers with respect to a request from a counter device or a second distribution rule having content of distributing data of a session established in any of the plurality of first servers to the same first server and distributing data of a new session to any of the plurality of second servers.

JP2004-229130A discloses a distribution control device used in a load distribution system. This distribution control device comprises a session determination unit that receives a change request of a distribution rule for distributing traffic to a distribution destination device group and determines whether a session of the traffic is an existing session established before the change request of the rule or a new session established after the change request of the rule, and a distribution unit that distributes the traffic to the distribution destination device group in accordance with the distribution rule before the change request of the rule in a case where the session determination unit determines that the session is the existing session, and distributes the traffic to the distribution destination device group in accordance with the distribution rule after the change request of the rule in a case where the session determination unit determines that the session is the new session.

### SUMMARY OF THE INVENTION

In update processing of an object in an object storage system, the object after update is not stored by overwriting an existing object and is stored in a storage node as a separate object from the existing object.

In addition, in the object storage system, for reliability improvement, load distribution, and the like of the system, a plurality of storage nodes are prepared, and an object transmitted from a user is distributed to any of the plurality of storage nodes based on a distribution rule set in advance.

In such a system, in a case where a storage node is newly added, an object cannot be distributed to the newly added storage node in a case where the object is distributed in accordance with a distribution rule (hereinafter, referred to as an old rule) employed before the addition of the storage node. Therefore, employing a new distribution rule (hereinafter, referred to as a new rule) that includes the newly added storage node in a distribution destination is considered. In this case, an update object that is an update of the existing object distributed in accordance with the old rule may be distributed in accordance with the new rule. Consequently, the update object may be stored in a storage node different from a storage node in which the existing object is stored. In a case where the existing object and the update object are stored in different storage nodes, it may be difficult to specify the most recent object.

While a case of changing the distribution rule in accordance with the addition of the storage node has been illustrated in the above description, an assumption that the distribution rule is changed regardless of the addition of the storage node is also made. In addition, an assumption that a plurality of distribution rules coexist and use of the distribution rules is differentiated in accordance with a situation is also made. In any of the cases, the existing object and the update object may be stored in different storage nodes because of presence of the plurality of distribution rules, and it may be difficult to specify the most recent object.

The disclosed technology is conceived in view of the above circumstances, and an object thereof is to facilitate specification of the most recent object even in a case where a plurality of distribution rules for distributing an object to any of a plurality of storage nodes are present.

An information processing apparatus according to an aspect of the disclosed technology performs processing of distributing an object to be stored for which an object after update has same identification information as an object before update to any of a plurality of storage nodes in accordance with a distribution rule set in advance, the apparatus comprising at least one processor.

The processor is configured to receive the object to be stored and, in a case where the distribution rule is changed, issue an inquiry as to whether or not an object having same identification information as the received object is stored to at least one storage node as a distribution destination corresponding to a past distribution rule. The processor is configured to, in a case where a response indicating that the object having the same identification information as the received object is stored is made from any storage node to which the inquiry is issued, distribute the received object to the storage node storing the object having the same identification information as the received object. The processor is configured to, in a case where the response indicating that the object having the same identification information as the received object is stored is not made from any storage node to which the inquiry is issued, distribute the received object to any of the plurality of storage nodes in accordance with a most recent distribution rule.

The distribution rule may be updated in accordance with addition of the storage node. In this case, a distribution destination corresponding to a relatively old distribution rule may not include the added storage node, and a distribution destination corresponding to a relatively new distribution rule may include the added storage node.

The processor may be configured to, in a case where a plurality of the past distribution rules are present, sequentially specify storage nodes to which the inquiry is to be issued by sequentially referring to the past distribution rules, and sequentially issue the inquiry to the specified storage nodes.

The processor may be configured to decide a storage node as a distribution destination of the object to be stored based on the identification information of the object to be stored. In this case, the processor may be configured to decide the storage node as the distribution destination of the object to be stored based on a value of a remainder in dividing a hash value of the identification information of the object to be stored by a divisor corresponding to a distribution rule to be applied.

The processor may be configured to issue the inquiry to one storage node specified by the identification information of the object to be stored among storage nodes as the distribution destination specified by the past distribution rule.

An information processing method according to another aspect of the disclosed technology is an information processing method for distributing an object to be stored for which an object after update has same identification information as an object before update to any of a plurality of storage nodes in accordance with a distribution rule set in advance, the method comprising causing a processor provided in an information processing apparatus to execute receiving the object to be stored, issuing, in a case where the distribution rule is changed, an inquiry as to whether or not an object having same identification information as the received object is stored to at least one storage node as a distribution destination corresponding to a past distribution rule, distributing, in a case where a response indicating that the object having the same identification information as the received object is stored is made from any storage node to which the inquiry is issued, the received object to the storage node storing the object having the same identification information as the received object, and distributing, in a case where the response indicating that the object having the same identification information as the received object is stored is not made from any storage node to which the inquiry is issued, the received object to any of the plurality of storage nodes in accordance with a most recent distribution rule.

An information processing program according to still another aspect of the disclosed technology is an information processing program causing at least one processor provided in an information processing apparatus to execute processing of distributing an object to be stored for which an object after update has same identification information as an object before update to any of a plurality of storage nodes in accordance with a distribution rule set in advance, the program causing the processor to execute a process comprising receiving the object to be stored, issuing, in a case where the distribution rule is changed, an inquiry as to whether or not an object having same identification information as the received object is stored to at least one storage node as a distribution destination corresponding to a past distribution rule, distributing, in a case where a response indicating that the object having the same identification information as the received object is stored is made from any storage node to which the inquiry is issued, the received object to the storage node storing the object having the same identification information as the received object, and distributing, in a case where the response indicating that the object having the same identification information as the received object is stored is not made from any storage node to which the inquiry is issued, the received object to any of the plurality of storage nodes in accordance with a most recent distribution rule.

According to the disclosed technology, specification of the most recent object can be facilitated even in a case where a plurality of distribution rules for distributing an object to any of a plurality of storage nodes are present.

### BRIEF DESCRIPTION OF THE DRAWINGS

Fig. 1 is a diagram illustrating an example of a configuration of a storage system according to an embodiment of the disclosed technology.
Fig. 2 is a diagram illustrating an example of a hardware configuration of an information processing apparatus according to the embodiment of the disclosed technology.
Fig. 3 is a diagram illustrating an example of rule information according to the embodiment of the disclosed technology.
Fig. 4 is a functional block diagram illustrating an example of a functional configuration of the information processing apparatus according to the embodiment of the disclosed technology.
Fig. 5A is a diagram illustrating an example of an aspect of distributing an object in accordance with a new rule according to the embodiment of the disclosed technology.
Fig. 5B is a diagram illustrating an example of an aspect of distributing an object in accordance with a second distribution rule according to the embodiment of the disclosed technology.
Fig. 6 is a flowchart illustrating an example of a flow of processing performed by executing an information processing program by a CPU according to the embodiment of the disclosed technology.
Fig. 7 is a flowchart illustrating an example of a flow of decision processing according to the embodiment of the disclosed technology.

### DESCRIPTION OF THE PREFERRED EMBODIMENTS

Hereinafter, an example of an embodiment of the disclosed technology will be described with reference to the drawings. The same or equivalent constituents and parts in each drawing will be designated by the same reference numerals, and description thereof may not be repeated.

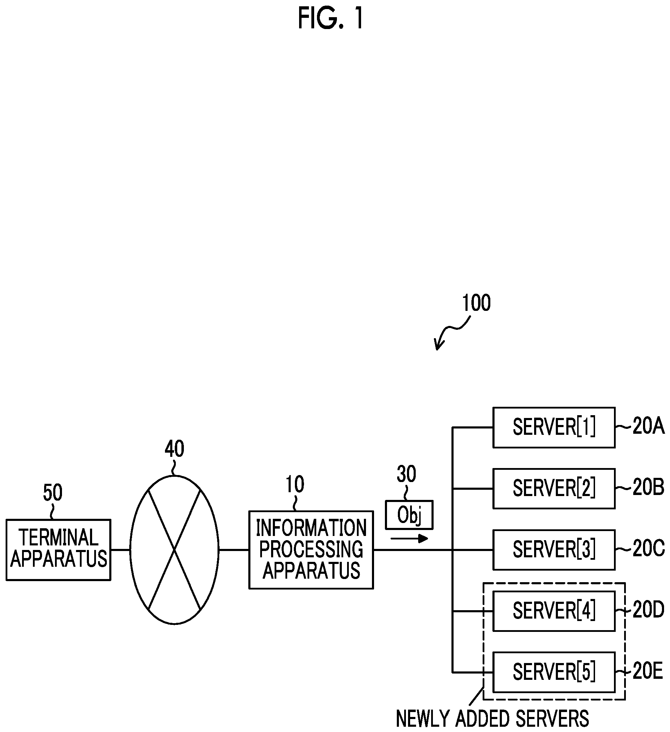

Fig. 1 is a diagram illustrating an example of a configuration of a storage system 100 according to the embodiment of the disclosed technology. The storage system 100 is configured to include an information processing apparatus 10 and a server[l] 20A to a server[5] 20E. The storage system 100 is connected to a terminal apparatus 50 via a network 40. The terminal apparatus 50 is a computer used by a user who uses the storage system 100. The storage system 100 stores an object 30 for which a storage request is made from the terminal apparatus 50 and, in a case where a readout request of the object is made from the terminal apparatus 50, reads out and transmits the requested object to the terminal apparatus 50. The object 30 is configured to include a data body and metadata related to the data body.

Each of the server[1] 20A to the server[5] 20E constitutes a storage node, and the object for which the storage request is made from the terminal apparatus 50 is stored in any of the server[1] 20A to the server[5] 20E. While five servers constituting the storage nodes are illustrated in Fig. 1, the number of servers comprised in the storage system 100 can be appropriately increased or decreased.

The information processing apparatus 10 functions as a load balancer that distributes loads of the server[1] 20A to the server[5] 20E. The information processing apparatus 10 is connected to each of the server[1] 20A to the server[5] 20E. The object 30 for which the storage request is made from the terminal apparatus 50 is supplied to the information processing apparatus 10. The information processing apparatus 10 distributes the object 30 to be stored supplied from the terminal apparatus 50 to any of the server[1] 20A to the server[5] 20E in accordance with a predetermined distribution rule. For example, the distribution rule may define an allocation ratio (distribution ratio) of the object for each of the server[1] 20A to the server[5] 20E.

In the storage system 100, in a case of updating an existing object already stored in any of the server[1] 20A to the server[5] 20E, an update object that is an update of the existing object is stored as a separate object from the existing object. That is, the update of the object in the storage system 100 is performed by "adding the update object" instead of so-called "data overwriting". The same identification information as the corresponding existing object is assigned to the update object. The identification information may be an object key that is a universally unique identifier (UUID) for uniquely identifying the object.

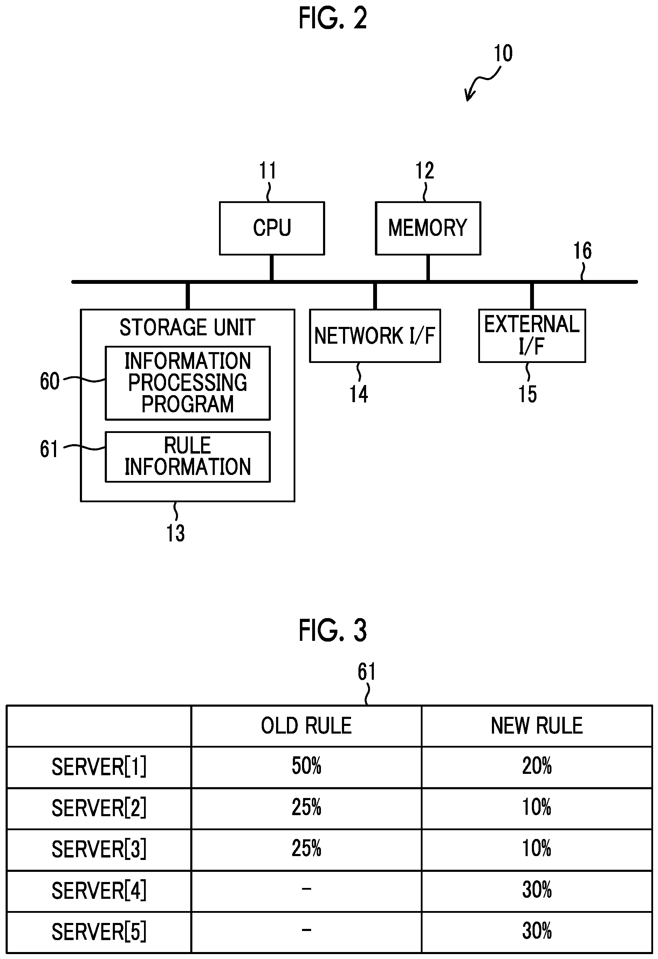

Fig. 2 is a diagram illustrating an example of a hardware configuration of the information processing apparatus 10. The information processing apparatus 10 includes a central processing unit (CPU) 11, a memory 12 as a transitory storage region, and a non-volatile storage unit 13. In addition, the information processing apparatus 10 includes a network interface 14 connected to the network 40 and an external interface 15 to which the server[1] 20A to the server[5] 20E are connected. The CPU 11, the memory 12, the storage unit 13, the network interface 14, and the external interface 15 are connected to a bus 16.

The storage unit 13 is implemented by a storage medium such as a hard disk drive (HDD), a solid state drive (SSD), or a flash memory. The storage unit 13 stores an information processing program 60 and rule information 61 described later. The CPU 11 reads out the information processing program 60 from the storage unit 13 into the memory 12 and executes the information processing program 60. The CPU 11 is an example of a processor according to the embodiment of the disclosed technology.

For example, access to the storage system 100 is performed via a management console displayed on a web browser operating on the terminal apparatus 50. In a case of storing an object in the storage system 100, the user creates a bucket on the management console and arranges the object to be stored in the bucket. The bucket is a virtual accommodation region for receiving the object to be stored. The user can create a plurality of buckets. In a case where the user arranges an object to which an object key that is identification information of the object is assigned, in the bucket and provides an upload instruction of the object on the management console, the object is transmitted to the storage system 100 and is stored in any of the server[1] 20A to the server[5] 20E.

The distribution rule in a case where the information processing apparatus 10 distributes the object to be stored to the server[1] 20A to the server[5] 20E is associated with the bucket. Content of the distribution rule is stored in the storage unit 13 of the information processing apparatus 10 as the rule information 61.

Fig. 3 is a diagram illustrating an example of the rule information 61 stored in the storage unit 13 of the information processing apparatus 10. In the following description, an assumption that the server[4] 20D and the server[5] 20E are newly added servers is made. The storage unit 13 of the information processing apparatus 10 stores a distribution rule (hereinafter, referred to as an old rule) employed at a time of creating a bucket created before the addition of the server[4] 20D and the server[5] 20E and a distribution rule (hereinafter, referred to as a new rule) employed after the addition of the server[4] 20D and the server[5] 20E as the rule information 61.

The old rule does not assume presence of the server[4] 20D and the server[5] 20E. Accordingly, a distribution destination of the object corresponding to the old rule normally does not include the added server[4] 20D and the server[5] 20E. In the example illustrated in Fig. 3, the old rule is defined as setting an allocation ratio of the object for the server[1] 20A to 50%, setting the allocation ratio of the object for the server[2] 20B to 25%, and setting the allocation ratio of the object for the server[3] 20C to 25% (allocation ratio of 2:1:1). For example, the allocation ratio of the object can be determined in accordance with processing performance of the servers. That is, a higher allocation ratio of the object may be set for a server having higher processing performance. Accordingly, the loads in which the processing performance of the servers is considered can be uniformed.

Even after the addition of the server[4] 20D and the server[5] 20E, the object cannot be distributed to the server[4] 20D and the server[5] 20E as long as the old rule is applied. Therefore, in the information processing apparatus 10 according to the present embodiment, the distribution rule employed at the time of creating the bucket can be changed. That is, in a case where a server functioning as a storage node is newly added, the new rule that includes the added server in the distribution destination is newly employed and added to the rule information 61.

In the example illustrated in Fig. 3, the new rule is defined as setting the allocation ratio of the object for the server[1] 20A to 20%, setting the allocation ratio of the object for the server[2] 20B to 10%, setting the allocation ratio of the object for the server[3] 20C to 10%, setting the allocation ratio of the object 30 for the server[4] 20D to 30%, and setting the allocation ratio of the object for the server[5] 20E to 30% (allocation ratio of 2:1:1:3:3).

For example, at the time of creating the bucket, the information processing apparatus 10 generates the distribution rule corresponding to the number of servers comprised in the storage system 100 and the processing performance and the like of each server at the point in time and stores the distribution rule in the storage unit 13 as the rule information 61. In addition, for example, at a time of adding a server, the information processing apparatus 10 generates a new distribution rule that includes the added server in the distribution destination of the object, and adds the new distribution rule to the rule information 61.

In a case of generating the new and old distribution rules, for example, the information processing apparatus 10 may generate the distribution rules such that the loads in which the processing performance of the servers installed at the point in time is considered are uniformed. In addition, in a case of generating the new and old distribution rules, the information processing apparatus 10 includes history information indicating which distribution rule is the most recent in the rule information 61.

In the information processing apparatus 10 according to the present embodiment, the distribution rule is updated in accordance with the addition of the server functioning as the storage node. Typically, a distribution destination corresponding to a relatively old distribution rule does not include the added server. A distribution destination corresponding to a relatively new distribution rule includes the added server.

While a case where two distribution rules of the old rule and the new rule are included in the rule information 61 is illustrated in the example illustrated in Fig. 3, the disclosed technology is not limited to this aspect. For example, in a case where the distribution rule is updated twice or more, three or more distribution rules are included in the rule information 61. The distribution rule can also be arbitrarily set and changed by a manager of the information processing apparatus 10.

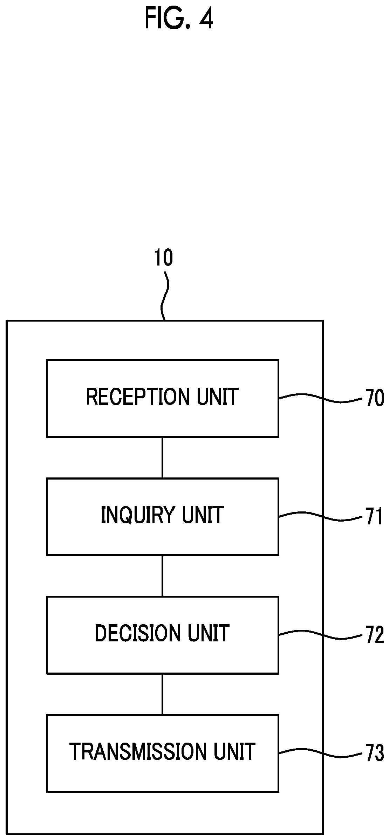

Fig. 4 is a functional block diagram illustrating an example of a functional configuration of the information processing apparatus 10 in a case of distributing objects to each of the servers constituting the storage nodes. As illustrated in Fig. 4, the information processing apparatus 10 includes a reception unit 70, an inquiry unit 71, a decision unit 72, and a transmission unit 73. The information processing apparatus 10 functions as the reception unit 70, the inquiry unit 71, the decision unit 72, and the transmission unit 73 by executing the information processing program 60 by the CPU 11.

As described above, in a case where the user arranges the object to be stored in the bucket and provides the upload instruction, the object to be stored is transmitted to the storage system 100. The reception unit 70 receives the object to be stored transmitted from the terminal apparatus 50.

In a case where the distribution rule is changed, that is, in a case where the most recent distribution rule (new rule) and the past distribution rule (old rule) are stored in the storage unit 13 as the rule information 61, the inquiry unit 71 issues an inquiry as to whether an object having the same identification information (object key) as the object to be stored received by the reception unit 70 is stored to each server as the distribution destination corresponding to the past distribution rule (old rule). That is, assuming that the object to be stored may be the update object, the inquiry unit 71 issues an inquiry as to whether or not the existing object having the same identification information as the object to be stored is stored to each server as the distribution destination corresponding to the past distribution rule (old rule). The inquiry unit 71 can specify the server as the distribution destination corresponding to the past distribution rule (old rule) by referring to the rule information 61 stored in the storage unit 13.

For example, in a case where the old rule and the new rule illustrated in Fig. 3 are stored in the storage unit 13 as the rule information 61, the inquiry unit 71 issues the inquiry to the server[1] 20A, the server[2] 20B, and the server[3] 20C that are distribution destinations corresponding to the past distribution rule (old rule). The inquiry unit 71 does not issue the inquiry to the server[4] 20D and the server[5] 20E that do not correspond to the distribution destination corresponding to the past distribution rule (old rule).

In addition, in a case where the distribution rule is not changed, that is, in a case where the distribution rule recorded as the rule information 61 is only one distribution rule generated at the time of creating the bucket, the inquiry unit 71 does not issue the inquiry.

In addition, in a case where the distribution rule is updated twice or more, and a plurality of the past distribution rules are present, the inquiry unit 71 sequentially specifies servers to which the inquiry is to be issued by sequentially referring to the plurality of past distribution rules, and sequentially issues the inquiry to the specified servers. In the present embodiment, the distribution rule is updated in accordance with the addition of the server functioning as the storage node, and the added server is included in the distribution destination corresponding to the updated distribution rule. Thus, an assumption that the number of servers as the distribution destination is smaller in a relatively old distribution rule than in a relatively new distribution rule is made. In this case, the servers to which the inquiry is to be issued may be sequentially specified by referring to the plurality of past distribution rules in order from the oldest.

In a case where a response indicating that the object having the same identification information as the object to be stored is stored is made from any server to which the inquiry is issued, the decision unit 72 decides the server storing the object having the same identification information as the object to be stored as the distribution destination of the object to be stored. That is, in a case where the object to be stored is the update object, and a server storing the existing object corresponding to the object to be stored is present, the decision unit 72 decides the server as the distribution destination of the object to be stored. For example, in a case where the response indicating that the object having the same identification information as the object to be stored is stored is made from the server[3] 20C with respect to the inquiry, the decision unit 72 decides the server[3] 20C as a storage destination of the object to be stored.

On the other hand, in a case where the response indicating that the object having the same identification information as the object to be stored is stored is not made from any server to which the inquiry is issued, the decision unit 72 decides the distribution destination of the object to be stored in accordance with the most recent distribution rule among the distribution rules included in the rule information 61.

The decision unit 72 decides the distribution destination corresponding to a distribution rule to be applied in the following procedure. The decision unit 72 calculates a hash value a of the identification information (object key) of the object to be stored. The decision unit 72 calculates a remainder c in dividing the hash value a by a divisor b determined in accordance with the distribution rule to be applied. The decision unit 72 decides a server associated with a value of the remainder c as the distribution destination of the object to be stored.

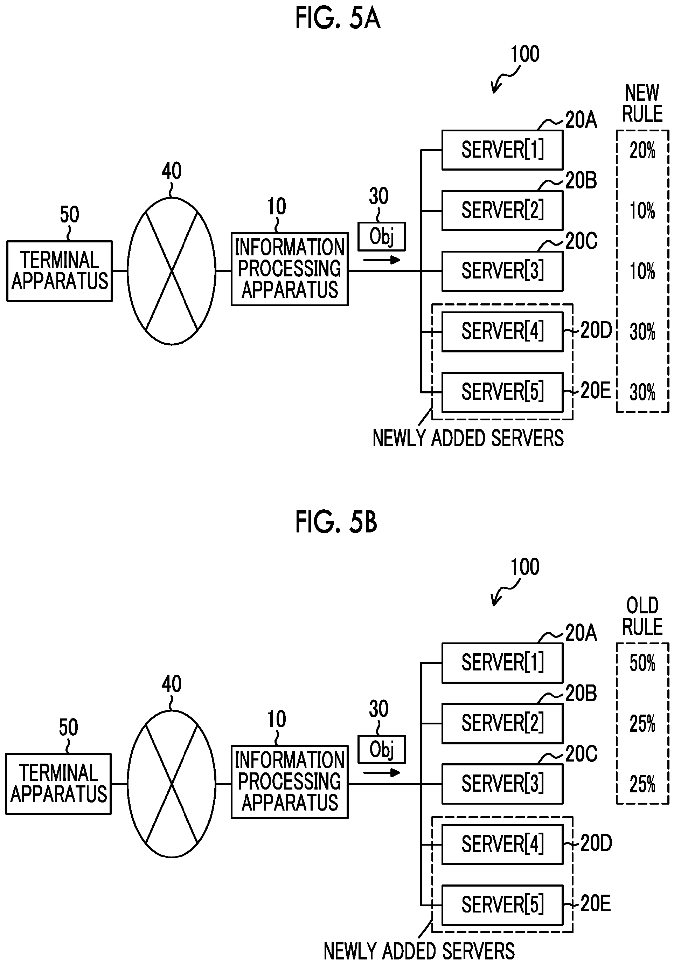

For example, in a case where the new rule (allocation ratio of 2:1:1:3:3) illustrated in Fig. 3 is applied as the most recent distribution rule, the decision unit 72 derives 10 (= 2 + 1 + 1 + 3 + 3) as the divisor b determined in accordance with the distribution rule to be applied. The decision unit 72 decides the distribution destination of the object to be stored as the server[1] 20A in a case where the remainder c in dividing the hash value a of the object to be stored by the divisor b (= 10) is 0 or 1, decides the distribution destination of the object to be stored as the server[2] 20B in a case where the remainder c is 2, decides the distribution destination of the object to be stored as the server[3] 20C in a case where the remainder c is 3, decides the distribution destination of the object to be stored as the server[4] 20D in a case where the remainder c is 4, 5, or 6, and decides the distribution destination of the object to be stored as the server[5] 20E in a case where the remainder c is 7, 8, or 9. Accordingly, as illustrated in Fig. 5A, the distribution of the object to be stored to each server can be performed using the allocation ratio (2:1:1:3:3) corresponding to the new rule illustrated in Fig. 3. A correspondence relationship between the remainder c and the server as the distribution destination for each distribution rule may be included in the rule information 61 or may be stored in the storage unit 13 separately from the rule information 61.

In a case where the distribution rule is not changed, that is, in a case where the distribution rule included in the rule information 61 is only the rule (hereinafter, referred to as an initial rule) initially employed at the time of creating the bucket, the decision unit 72 decides the distribution destination in accordance with the remainder c in dividing the hash value a of the identification information of the object by the divisor b determined in accordance with the initial rule.

For example, in a case where the old rule (allocation ratio of 2:1:1) illustrated in Fig. 3 is applied as the initial rule, the decision unit 72 derives 4 (= 2 + 1 + 1) as the divisor b determined in accordance with the distribution rule to be applied. The decision unit 72 decides the distribution destination of the object to be stored as the server[1] 20A in a case where the remainder c in dividing the hash value a of the identification information of the object to be stored by the divisor b (= 4) is 0 or 1, decides the distribution destination of the object to be stored as the server[2] 20B in a case where the remainder c is 2, and decides the distribution destination of the object to be stored as the server[3] 20C in a case where the remainder c is 3. Accordingly, as illustrated in Fig. 5B, the distribution of the object to be stored to each server can be performed using the allocation ratio (2:1:1) corresponding to the initial rule (old rule).

The transmission unit 73 transmits the object to be stored to the server as the distribution destination decided by the decision unit 72 among the server[1] 20A to the server[5] 20E. The object to be stored is stored in the storage medium such as the hard disk comprised in the server as the distribution destination.

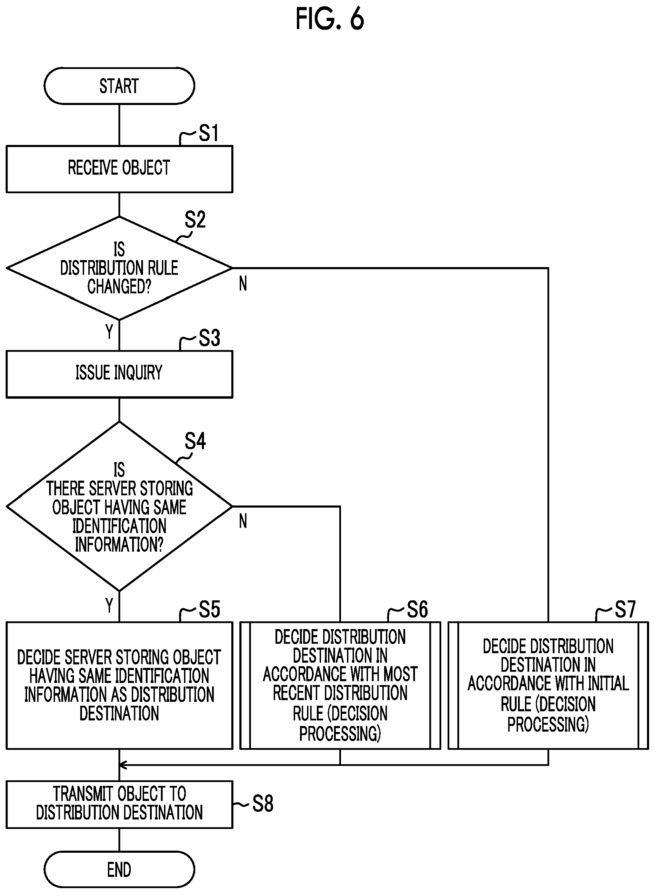

Hereinafter, an action of the information processing apparatus 10 will be described. Fig. 6 is a flowchart illustrating an example of a flow of processing performed by executing the information processing program 60 by the CPU 11. For example, the information processing program 60 is executed in a case where the storage request of the object is made from the terminal apparatus 50. An assumption that the storage unit 13 stores the rule information 61 in advance is made.

In step S1, the reception unit 70 receives the object to be stored transmitted from the terminal apparatus 50.

In step S2, the reception unit 70 refers to the rule information 61 stored in the storage unit 13 and determines whether or not the distribution rule has been changed so far. For example, in a case where only the initial rule is recorded as the rule information 61, the reception unit 70 determines that the distribution rule is not changed. On the other hand, in a case where the most recent distribution rule (new rule) and the past distribution rule (old rule) are recorded as the rule information 61, the reception unit 70 determines that the distribution rule is changed. In a case where a determination that the distribution rule is changed is made, the processing transitions to step S3. In a case where a determination that the distribution rule is not changed is made, the processing transitions to step S7.

In step S3, the inquiry unit 71 issues the inquiry as to whether or not the object having the same identification information (object key) as the object received in step S1 is stored to each server as the distribution destination that is included in the rule information 61 and corresponds to the past distribution rule (old rule).

In step S4, the inquiry unit 71 determines whether or not the response indicating that the object having the same identification information as the object received in step S1 is stored is made from each server to which the inquiry is issued. In a case where the response indicating that the object having the same identification information as the object received in step S1 is stored is made from any server to which the inquiry is issued, the processing transitions to step S5. On the other hand, in a case where the response indicating that the object having the same identification information as the object received in step S1 is stored is not made from any server to which the inquiry is issued, the processing transitions to step S6.

In step S5, the decision unit 72 decides the server storing the object having the same identification information as the object received in step S1 as the distribution destination of the object received in step S1.

In step S6, the decision unit 72 performs decision processing of deciding the distribution destination of the object to be stored in accordance with the most recent distribution rule.

In step S7, the decision unit 72 performs the decision processing of deciding the distribution destination of the object to be stored in accordance with the initial rule.

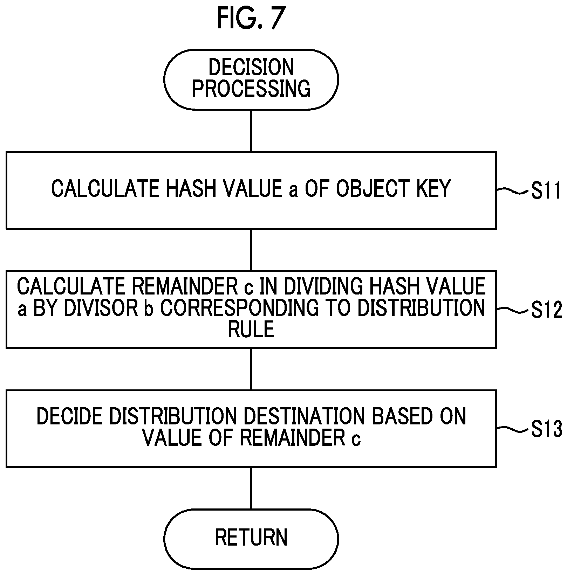

Here, Fig. 7 is a flowchart illustrating details of the decision processing performed in steps S6 and S7. Hereinafter, the decision processing will be described with reference to the flowchart in Fig. 7.

In step S11, the decision unit 72 calculates the hash value a of the identification information (object key) of the object received in step S 1.

In step S12, the decision unit 72 calculates the remainder c in dividing the hash value a by the divisor b determined in accordance with the most recent distribution rule (in a case of executing step S6) or the initial rule (in a case of executing step S7).

In step S13, the decision unit 72 decides the distribution destination of the object received in step S1 based on the remainder c calculated in step S12.

With reference to Fig. 6, in step S8, the transmission unit 73 transmits the object received in step S1 to the server as the distribution destination decided in step S5, S6, or S7. The object to be stored is stored in the storage medium such as the hard disk comprised in the server as the distribution destination.

As described so far, the information processing apparatus 10 according to the present embodiment distributes the object to be stored for which the object after update has the same identification information as the object before update, to any of the plurality of servers functioning as the storage nodes in accordance with the distribution rule set in advance. The information processing apparatus 10 receives the object to be stored and, in a case where the distribution rule is changed, issues the inquiry as to whether or not the object having the same identification information as the received object is stored to at least one server as the distribution destination corresponding to the past distribution rule. In a case where the response indicating that the object having the same identification information as the received object is stored is made from any server to which the inquiry is issued, the information processing apparatus 10 distributes the received object to the server storing the object having the same identification information as the received object. On the other hand, in a case where the response indicating that the object having the same identification information as the received object is stored is not made from any server to which the inquiry is issued, the information processing apparatus 10 distributes the received object to any of the plurality of servers in accordance with the most recent distribution rule.

According to the information processing apparatus 10 according to the present embodiment, in a case where a server functioning as a storage node is added, a new distribution rule including the added server as the distribution destination of the object is generated. Thus, the added server can be efficiently used.

In the system in which the distribution rule can be changed, it is considered that the update object that is the update of the existing object distributed in accordance with the past distribution rule is distributed in accordance with the most recent distribution rule. In this case, the update object may be stored in a server different from the server in which the existing object is stored. In a case where the existing object and the update object are stored in different servers, it may be difficult to specify the most recent object.

According to the information processing apparatus 10 according to the present embodiment, even in a case where the distribution rule is changed, the inquiry as to whether or not the object having the same identification information as the object to be stored is stored is issued to the servers as the distribution destination corresponding to the past distribution rule. In a case where the response indicating that the object is stored is made from any server, the object to be stored is distributed to the server. Accordingly, the update object can be distributed to the same server as the server in which the existing object is stored. That is, according to the information processing apparatus 10 according to the present embodiment, even in a case where a plurality of distribution rules are present, specification of the most recent object can be facilitated.

In addition, according to the information processing apparatus 10 according to the present embodiment, the server as the distribution destination of the object to be stored is decided based on the remainder c in dividing the hash value a of the identification information of the object to be stored by the divisor b corresponding to the distribution rule to be applied. Thus, even in a case of distributing the existing object and the update object in accordance with the same distribution rule, the update object can be distributed to the server in which the existing object is stored.

While a case of issuing the inquiry to all servers that may be the distribution destination corresponding to the past distribution rule is illustrated in the present embodiment, the disclosed technology is not limited to this aspect. The inquiry may be issued to only one server specified by the identification information of the object to be stored among the servers as the distribution destination specified by the past distribution rule. As described above, the same identification information (object key) as the existing object before update is assigned to the update object. In addition, the information processing apparatus 10 decides the distribution destination in accordance with the remainder c in dividing the hash value a of the identification information of the object to be stored by the divisor b determined in accordance with the distribution rule. Accordingly, by calculating the remainder c in dividing the hash value a of the object to be stored by the divisor b determined in accordance with the past distribution rule, one server as a storage destination of the existing object in a case where an assumption that the object to be stored is the update object and the corresponding existing object is distributed in accordance with the past distribution rule is made can be specified. In a case where the object to be stored is the update object, and the inquiry is issued to one server specified as described above, the server returns the response indicating that the object having the same identification information as the object to be stored is stored. In this case, the information processing apparatus 10 stores the object to be stored in the one specified server. In a case where the object to be stored is the newly created object, and the inquiry is issued to one server specified as described above, the server returns the response indicating that the object having the same identification information as the object to be stored is not stored. In this case, the information processing apparatus 10 distributes the object to be stored in accordance with the most recent rule.

In addition, while a case of changing the distribution rule in accordance with the addition of the server functioning as the storage node is illustrated in the present embodiment, the disclosed technology is not limited to this aspect. The distribution rule can be changed at an arbitrary timing. In addition, the server as the distribution destination corresponding to the past distribution rule and the server as the distribution destination corresponding to the most recent distribution rule may partially match, completely match, or completely not match.

In each of the embodiments, for example, the following various processors can be used as a hardware structure of a processing unit executing various types of processing of the reception unit 70, the inquiry unit 71, the decision unit 72, and the transmission unit 73. The various processors include, in addition to a CPU that is a general-purpose processor functioning as various processing units by executing software (program) as described above, a programmable logic device (PLD) that is a processor such as an FPGA having a circuit configuration changeable after manufacturing, a dedicated electric circuit that is a processor such as an application specific integrated circuit (ASIC) having a circuit configuration dedicatedly designed to execute specific processing, and the like.

One processing unit may be composed of one of the various processors or may be composed of a combination of two or more processors of the same type or different types (for example, a combination of a plurality of FPGAs or a combination of a CPU and an FPGA). In addition, a plurality of processing units may be composed of one processor.

As an example in which the plurality of processing units are composed of one processor, first, as represented by a computer such as a client and a server, a form in which one processor is composed of a combination of one or more CPUs and software and the processor functions as the plurality of processing units is possible. Second, as represented by a system on chip (SoC) and the like, a form of using a processor that implements functions of the entire system including the plurality of processing units in one integrated circuit (IC) chip is possible. Accordingly, the various processing units are configured using one or more of the various processors as a hardware structure.

Furthermore, more specifically, an electric circuit (circuitry) in which circuit elements such as semiconductor elements are combined can be used as the hardware structure of the various processors.

In addition, while an aspect in which the information processing program 60 is stored (installed) in advance in the storage unit 13 has been described in the embodiments, the disclosed technology is not limited thereto. The information processing program 60 may be provided in the form of a recording on a recording medium such as a compact disc read only memory (CD-ROM), a digital versatile disc read only memory (DVD-ROM), and a universal serial bus (USB) memory. In addition, the information processing program 60 may be in the form of a download from an external device through a network.

The disclosure of JP2020-138222 filed on August 18, 2020 is incorporated in the present specification by reference in its entirety. In addition, all documents, patent applications, and technical standards disclosed in the present specification are incorporated in the present specification by reference to the same extent as in a case where each of the documents, patent applications, technical standards are specifically and individually indicated to be incorporated by reference.

## Claims

1. An information processing apparatus that distributes an object to be stored for which an object after update has same identification information as an object before update to any of a plurality of storage nodes in accordance with a distribution rule set in advance, the apparatus comprising:
at least one processor,
wherein the processor is configured to:
receive the object to be stored;
in a case where the distribution rule is changed, issue an inquiry as to whether or not an object having same identification information as the received object is stored to at least one storage node as a distribution destination corresponding to a past distribution rule;
in a case where a response indicating that the object having the same identification information as the received object is stored is made from any storage node to which the inquiry is issued, distribute the received object to the storage node storing the object having the same identification information as the received object; and
in a case where the response indicating that the object having the same identification information as the received object is stored is not made from any storage node to which the inquiry is issued, distribute the received object to any of the plurality of storage nodes in accordance with a most recent distribution rule.

2. The information processing apparatus according to claim 1,
wherein the distribution rule is updated in accordance with addition of the storage node,
a distribution destination corresponding to a relatively old distribution rule does not include the added storage node, and
a distribution destination corresponding to a relatively new distribution rule includes the added storage node.

3. The information processing apparatus according to claim 1 or 2,
wherein the processor is configured to, in a case where a plurality of the past distribution rules are present, sequentially specify storage nodes to which the inquiry is to be issued by sequentially referring to the past distribution rules, and sequentially issue the inquiry to the specified storage nodes.

4. The information processing apparatus according to any one of claims 1 to 3,
wherein the processor is configured to decide a storage node as a distribution destination of the object to be stored based on the identification information.

5. The information processing apparatus according to claim 4,
wherein the processor is configured to decide the storage node as the distribution destination of the object to be stored based on a value of a remainder in dividing a hash value of the identification information by a divisor corresponding to a distribution rule to be applied.

6. The information processing apparatus according to any one of claims 1 to 5,
wherein the processor is configured to issue the inquiry to one storage node specified by the identification information among storage nodes as the distribution destination specified by the past distribution rule.

7. An information processing method for distributing an object to be stored for which an object after update has same identification information as an object before update to any of a plurality of storage nodes in accordance with a distribution rule set in advance, the method comprising:
causing a processor provided in an information processing apparatus to execute:
receiving the object to be stored;
issuing, in a case where the distribution rule is changed, an inquiry as to whether or not an object having same identification information as the received object is stored to at least one storage node as a distribution destination corresponding to a past distribution rule;
distributing, in a case where a response indicating that the object having the same identification information as the received object is stored is made from any storage node to which the inquiry is issued, the received object to the storage node storing the object having the same identification information as the received object; and
distributing, in a case where the response indicating that the object having the same identification information as the received object is stored is not made from any storage node to which the inquiry is issued, the received object to any of the plurality of storage nodes in accordance with a most recent distribution rule.

8. An information processing program causing at least one processor provided in an information processing apparatus to execute processing of distributing an object to be stored for which an object after update has same identification information as an object before update to any of a plurality of storage nodes in accordance with a distribution rule set in advance, the program causing the processor to execute a process comprising:
receiving the object to be stored;
issuing, in a case where the distribution rule is changed, an inquiry as to whether or not an object having same identification information as the received object is stored to at least one storage node as a distribution destination corresponding to a past distribution rule;
distributing, in a case where a response indicating that the object having the same identification information as the received object is stored is made from any storage node to which the inquiry is issued, the received object to the storage node storing the object having the same identification information as the received object; and
distributing, in a case where the response indicating that the object having the same identification information as the received object is stored is not made from any storage node to which the inquiry is issued, the received object to any of the plurality of storage nodes in accordance with a most recent distribution rule.
